# FASCICULE DE BREVET EUROPEEN

(11) **EP 4 078 893 B1**
(45) Date de publication et mention de la délivrance du brevet: **25.03.2026**
(21) Numéro de dépôt: 20820148.3
(22) Date de dépôt: 09.12.2020
(51) Int. Cl.: H04L 9/08, H04L 9/32

(54) **PROCÉDÉ ET DISPOSITIF DE CONTRÔLE D'ACCÈS ANONYME À UNE PLATEFORME COLLABORATIVE D'ANONYMISATION**
VERFAHREN UND VORRICHTUNG ZUR KONTROLLE DES ANONYMEN ZUGRIFFS AUF EINE KOLLABORATIVE ANONYMISIERUNGSPLATTFORM
METHOD AND DEVICE FOR CONTROLLING ANONYMOUS ACCESS TO A COLLABORATIVE ANONYMIZATION PLATFORM

(30) Priorité: 17.12.2019 FR 1914647
(43) Date de publication de la demande: 26.10.2022
(73) Titulaire: Commissariat à l'Energie Atomique et aux Energies Alternatives, 75015 Paris (FR)
(72) Inventeur: LAURENT, Frédéric, 78350 JOUY EN JOSAS (FR); OLIVEREAU, Alexis, 91400 ORSAY (FR)
(74) Mandataire: Atout PI Laplace
(86) Numéro de dépôt international: PCT/EP2020/085186
(87) Numéro de publication internationale: WO 2021/122186

(56) Documents cités:
- JAEGWAN PARK ET AL: "Wireless Authentication Protocol Preserving User Anonymity", 1 March 2001 (2001-03-01), XP055714536, Retrieved from the Internet <URL:https://pdfs.semanticscholar.org/e49f/ab6ac42da5d14337bb8f00a63306299b88f1.pdf> [retrieved on 20200714]

## Description

L'invention se situe dans le domaine des protocoles de communication, et concerne plus particulièrement un procédé et un dispositif de contrôle d'accès anonyme à une plateforme collaborative d'anonymisation.

La sécurité des données et l'accès contrôlé à divers systèmes collaboratifs sont des défis majeurs auxquels les organisations doivent faire face pour limiter les risques d'intrusion et d'attaques. Les plateformes collaboratives d'anonymisation existantes offrent peu ou pas de contrôle d'accès, et donc pas de sécurité en tant que tel.

Aujourd'hui les solutions de communication présentant les meilleurs niveaux de « privacy » (anglicisme pour anonymat) sont des solutions gratuites et collaboratives basées sur des protocoles pair-à-pair (P2P) comme les protocoles Tor (*« The Onion Router »*) ou I2P (« *Invisible Internet Project »*). Ces solutions ne requièrent aucun mécanisme d'authentification et d'accès particulier d'une part parce qu'elles sont gratuites, mais également et surtout parce que par nature, un mécanisme d'authentification et d'accès est a priori incompatible avec un haut niveau d'anonymisation.

Une solution améliorée décrite dans la demande de brevet FR3072238 de la Demanderesse, présente une plateforme collaborative d'anonymisation ayant un niveau de privacy et de sécurité potentiellement largement supérieur aux solutions existantes, mais aussi des performances en termes de qualité de service compatibles avec des usages Internet modernes et professionnels, tout en permettant de garder un certain contrôle sur les échanges afin de limiter des usages criminels de la plateforme.

L'ensemble de ces solutions décrivent le fonctionnement nominal du système global. Or, il est également nécessaire pour ne pas amoindrir l'intérêt de la plateforme d'anonymisation en mode nominal de garantir que l'anonymat ne soit pas compromis lors de la phase transitoire. Typiquement il y a lieu de permettre que l'accès à un service souhaité se fasse sans aucune compromission du niveau de privacy et de sécurité de l'utilisateur.

Par ailleurs, au-delà du seul accès à la plateforme, des services (restreints, voire commerciaux) souhaitant bénéficier de réelles propriétés d'anonymisation (i.e. de la couche réseau jusqu'à la couche applicative) peuvent être envisagés au-dessus de la plateforme, comme par exemple un service de traitement d'images pour la santé reposant sur un moteur d'intelligence artificielle hébergé dans un centre de calcul distant, ou des services de communication sécurisés de type « Telegram Messenger » ou « Signal », ou encore des applications d'échange d'informations sur la fraude bancaire.

Il existe ainsi le besoin d'une solution qui permette de contrôler l'accès à une plateforme collaborative d'anonymisation sans compromettre l'anonymat du demandeur d'accès.

Un demandeur d'accès à une plateforme collaborative d'anonymisation peut s'appuyer sur plusieurs fournisseurs d'accès à cette plate-forme, qui sont dans le cas général plusieurs opérateurs de communication et au moins un opérateur du service d'anonymisation. Parmi les opérateurs de communication, l'un est supposé avoir octroyé les droits d'accès à la plateforme collaborative d'anonymisation, par exemple moyennant la souscription d'une option dans un contrat d'abonnement à un service d'accès à Internet. Comme l'utilisation de la plateforme collaborative d'anonymisation pour pouvoir être établie, requière des interactions entre le demandeur d'accès et les fournisseurs d'accès à cette plate-forme, il importe que ces interactions, tout en garantissant l'anonymat du demandeur d'accès, ne puissent s'effectuer que dans la mesure où celui-ci peut prouver qu'il s'est effectivement vu octroyer les droits d'accès à la plateforme collaborative.

Des solutions basées sur des mécanismes d'itinérance ou « roaming » en anglais, utilisées dans le secteur de la téléphonie mobile permettent à un opérateur tiers d'authentifier le client d'un opérateur d'origine sans pour autant connaître le secret à long terme qui est partagé entre le client et son opérateur d'origine pour le chiffrement des échanges. Ces mécanismes dans lesquels l'opérateur d'origine remet à l'opérateur tiers des éléments à échanger avec son client afin de l'autoriser ensuite à communiquer, permettent à l'usager d'un service s'étant vu octroyer les droits (dans l'exemple de la téléphonie, les droits pour un service de communication), de bénéficier de droits équivalents auprès d'un autre fournisseur de service, sans en être connu de la manière dont il était connu par son opérateur d'origine.

Ces mécanismes ne sont pas satisfaisants du point de vue de la problématique considérée, pour la raison principale qu'ils impliquent un dialogue direct en mode roaming et une connaissance mutuelle entre les deux opérateurs du client, i.e. l'opérateur réseau d'origine auprès duquel l'utilisateur a souscrit son abonnement et l'opérateur réseau tiers auprès duquel il demande à être connecté. Une connaissance mutuelle des deux opérateurs représente une faille potentielle inacceptable.

Une approche permettant de masquer l'auteur d'une transaction connue comme « Ring signatures » est décrite dans l'article 'How to leak a secret' de Ron Rivest, Adi Shamir, and Yael Tauman, ASIACRYPT 2001. Volume 2248 of Lecture Notes in Computer Science, pages 552-565. Les « Ring Signatures » sont mises en œuvre en particulier dans le cadre de la cryptomonnaie « CryptoNote », et permettent de masquer l'auteur d'une transaction parmi un ensemble de candidats. Bien qu'un homme du métier pourrait dériver une application de ce principe au contexte de l'invention où un opérateur ayant octroyé des droits d'accès à une plateforme à un utilisateur, camouflerait celui-ci via l'utilisation d'une ring signature construite sur la base de son identité et de celle de plusieurs autres clients candidats, cette solution ne serait pas généralisable car le nombre de candidats resterait relativement limité.

Par ailleurs, l'opérateur ayant octroyé les droits d'accès serait identifiable en tant qu'opérateur des différents clients candidats mentionnés dans la signature, ce qui représenterait une faille potentielle inacceptable.

Il existe ainsi le besoin d'une solution qui soit applicable à un grand nombre de clients d'un ou plusieurs fournisseurs de service et qui souhaitent se connecter à une plateforme d'anonymisation. Une telle solution doit protéger l'identité de tout opérateur ayant octroyé des droits d'accès.

Un autre mécanisme proche du roaming, est le mécanisme d'échange de type « Push » décrit dans la RFC 2904 qui permet à un client d'accéder à un service en prouvant au fournisseur de celui-ci l'existence d'une interaction passée avec un serveur d'autorisation. Bien qu'un homme du métier pourrait généraliser ce système avec un serveur d'autorisation qui ne remettrait pas la preuve d'interaction à l'utilisateur lui-même mais la stockerait dans une base de données éventuellement consultée par le fournisseur de service ultérieurement, un tel système n'offrirait pas de support pour l'anonymat des transactions.

Aussi, il existe le besoin d'une solution qui permette de préserver un anonymat total tant pendant la phase transitoire de connexion à une plateforme collaborative que pendant le mode nominal d'utilisation de la plateforme.

La présente invention permet de pallier les inconvénients des approches connues et de répondre aux besoins précités.

Ainsi, un objet de l'invention est de fournir une solution d'accès anonyme à une plateforme d'anonymisation.

Le principe général de l'invention est basé sur un mécanisme d'autorisation qui vise à autoriser l'accès à une plateforme collaborative d'anonymisation, de manière totalement anonyme, sécurisée et sans tiers de confiance, et/ou autoriser l'accès à un service nécessitant des propriétés d'anonymat reposant sur une telle plateforme.

Avantageusement, le mécanisme d'accès à une plateforme d'anonymisation repose sur un principe de distribution de rôles entre utilisateurs et opérateurs afin de s'affranchir d'un tiers de confiance, le tiers de confiance étant la limitation des solutions connues de privacy.

L'invention est particulièrement avantageuse pour compléter le fonctionnement en phase nominale de la plateforme collaborative d'anonymisation développée par la Demanderesse et décrite dans la demande de brevet précitée, en apportant une solution pour la phase « transitoire » qui permet de garantir un anonymat total lors de la phase de connexion à la plateforme tout en proposant un mécanisme de contrôle d'accès à la plateforme.

L'invention s'applique avantageusement à tout service anonyme payant et/ou restreint, commercialisé et/ou offert par un ou des opérateurs d'une plateforme collaborative d'anonymisation. Ces services peuvent être de natures très diverses tels que : des bases de données financières pour garantir l'anonymat des utilisateurs (et par exemple ne pas dévoiler les secteurs ou les entreprises étudiés en vue d'investissements futurs), des services d'intelligence artificielle pour la « esanté » (où les traitements qui sont faits de manière déportée sur des centres de calculs qui connaissent les données (typiquement : images (radios, scanner...), les praticiens (docteur de ville, chirurgien), voire les individus directement, mettent en péril le secret médical).

Pour obtenir les résultats recherchés, il est proposé en revendication indépendante, un procédé mis en œuvre par ordinateur de contrôle d'accès anonyme à une plateforme collaborative d'anonymisation opérée par différents opérateurs, pour un utilisateur ayant des droits d'accès à la plateforme collaborative d'anonymisation par un premier opérateur ou fournisseur d'accès. Le procédé comprend les étapes de :
- émettre une requête d'accès à un service de la plateforme collaborative d'anonymisation, pour un utilisateur ayant des droits d'accès à ladite plateforme octroyés par un premier opérateur OP1;
- recevoir une liste de couples (PEi; Cléi) où chaque couple contient un identifiant d'un point d'entrée PEi vers ladite plateforme par un opérateur parmi la pluralité d'opérateurs, et contient une clé publique Cléi aléatoire générée pour ce point d'entrée ;
- générer de manière aléatoire, une valeur aléatoire privée Vx ;
- sélectionner 'n' couples (PEn, Clén) où un premier couple (PE1, Clé1) a un identifiant de point d'entrée PE1 vers ladite plateforme par le premier opérateur OP1, et où chaque autre couple ((PE2, Clé2), ..., (PEi, Cléi), ..., (PEn, Clén)) a un identifiant de point d'entrée vers ladite plateforme par un autre opérateur ;
- communiquer :
   - au premier opérateur via le point d'entrée PE1 sélectionné, une première clé privée Fx(Vx, Clé2, ... , Clén), construite, selon une opération de chiffrage 'Fx' prédéfinie associative et commutative, à partir de la valeur aléatoire privée Vx et de toutes les clés publiques associées aux 'n-1' autres points d'entrée sélectionnés sauf la clé publique Clé1 du point d'entrée PE1 du premier couple (PE1, Clé1) ; et
   - à chaque opérateur de chaque autre couple sélectionné, une clé privée Fx(Vx, Clé1, ... , Cléi, ..., Clén) construite, selon l'opération de chiffrage 'Fx', à partir de la valeur aléatoire privée Vx et de toutes les clés publiques associées aux 'n-1' autres points d'entrée sauf la clé publique dudit point d'entrée de chaque autre couple ;
- enregistrer via la plateforme collaborative d'anonymisation dans une base de données de clés privées, une clé privée utilisateur construite à partir de la première clé privée Fx(Vx, Clé2, ... , Clén) et de la clé publique Clé1 associée au premier point d'entrée ;
- mettre en œuvre sur la plateforme collaborative d'anonymisation, un algorithme de vérification de clés privées, l'algorithme opérant de manière itérative entre le premier opérateur et chacun des autres opérateurs sélectionnés pour vérifier dans la base de données de clés privées, la validité de la clé privée utilisateur; et
- valider ou refuser à l'utilisateur un accès à la plateforme collaborative d'anonymisation via le point d'entrée de chaque opérateur, selon le résultat de la vérification.

Selon des modes de réalisation alternatifs ou combinés :
- l'étape de communication des clés privées comprend les étapes de :
   - calculer un premier nombre dit « premier nombre privé utilisateur » (Vx x Clé2 x ... x Clén) à partir de la valeur aléatoire privée Vx et des clés publiques associées aux 'n-1' points d'entrée sélectionnés pour les autres opérateurs ; et
   - calculer pour chaque autre opérateur un second nombre dit « second nombre privé utilisateur » (Vx x Clé1 x ... x Cléi x ... x Clén) à partir de la valeur aléatoire
   privée Vx et de toutes les clés publiques associées aux 'n-1' autres points d'entrée sauf la clé publique dudit point d'entrée.
- l'étape de mise en œuvre sur la plateforme collaborative d'anonymisation, d'un algorithme de vérification et de validation de clés privées entre deux opérateurs, comprend des étapes de :
   - (306) pour le premier opérateur :
      - générer à partir du premier nombre privé utilisateur reçu et de la clé publique associée au point d'entrée du premier opérateur, un nombre dit « premier nombre privé utilisateur-opérateur » ((Vx x Clé2 x ... x Cléi x ... x Clén) x Clé1) ; et
      - enregistrer via la plateforme collaborative d'anonymisation, le premier nombre privé utilisateur-opérateur ((Vx x Clé2 x... x Cléi x ... x Clén) x Clé1) dans une base de données de clés privées (206) ;
   - (308) pour chacun des autres opérateurs :
      - générer à partir du second nombre privé utilisateur reçu et de la clé publique associée au point d'entrée dudit autre opérateur, un nombre dit « second nombre privé utilisateur-opérateur » ((Vx x Clé1 x ... x Clén) x Cléi) ; et
      - vérifier via la plateforme collaborative d'anonymisation, si le second nombre privé utilisateur-opérateur » ((Vx x Clé1 x ... x Clén) x Cléi) est enregistré dans ladite base de données de clés privées (206).
- l'étape d'enregistrement dans la base de données de clés privées d'un nombre privé utilisateur-opérateur, comprend de plus l'enregistrement d'un paramètre de durée de vie dudit nombre.
- le procédé comprend de plus après l'étape d'enregistrement une étape de décomptage du paramètre de durée de vie.
- l'étape de sélection des couples est faite de manière automatique selon des critères de sélection prédéfinis.
- l'opération de chiffrage Fx est une opération de type élévation à une puissance modulaire.
- l'opération de chiffrage Fx est une opération dite « one-way accumulators ».

L'invention couvre un produit programme d'ordinateur comprenant des instructions de code non transitoire permettant d'effectuer les étapes du procédé revendiqué, lorsque le programme est exécuté sur un ordinateur.

L'invention couvre de plus un dispositif de contrôle d'accès anonyme à une plateforme collaborative d'anonymisation opérée par différents opérateurs, pour un utilisateur ayant des droits d'accès à la plateforme collaborative d'anonymisation par un premier opérateur ou fournisseur d'accès, le dispositif comprend des moyens pour mettre en œuvre les étapes du procédé selon l'une quelconque des revendications.

D'autres caractéristiques, détails et avantages de l'invention ressortiront à la lecture de la description faite en référence aux dessins annexés donnés à titre d'exemple et qui représentent, respectivement :
[Fig.1] est une représentation topologique d'une infrastructure permettant d'implémenter l'invention;
[Fig.2] illustre une représentation d'un exemple de mise en œuvre de l'invention selon la topologie de la figure 1;
[Fig.3] illustre les procédures exécutées entre les entités de la figure 2 dans un mode de réalisation de l'invention; et
[Fig.4] illustre les étapes opérées par la méthode de l'invention dans un mode de réalisation.

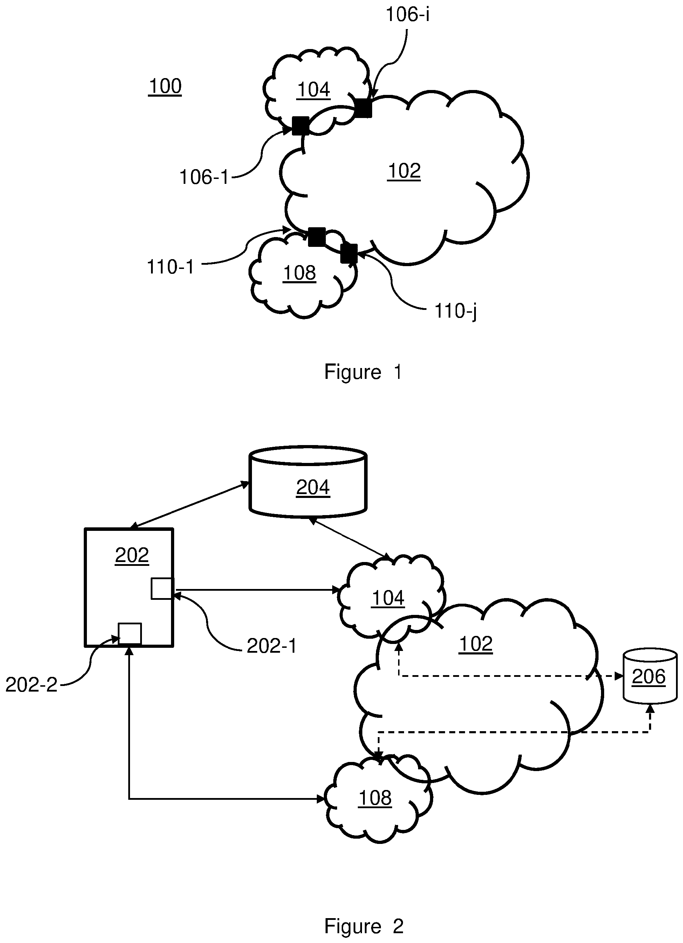

La figure 1 illustre un environnement général 100 dans lequel l'invention est implémentée avantageusement par exemple tel qu'illustré par la figure 2. L'environnement comprend une plateforme collaborative d'anonymisation 102 (aussi désignée comme service « anonyme ») qui est opérée de manière collaborative par au moins trois opérateurs indépendants dont au moins deux opérateurs indépendants (104, 108) sont utilisés pour accéder à la plateforme.

Pour s'affranchir d'un tiers de confiance, la plateforme a besoin d'au moins trois opérateurs indépendants. Dans le contexte de l'invention décrit, une connexion au service d'anonymisation pour se connecter à la plateforme d'anonymisation de manière anonyme, requière la connexion à au moins deux opérateurs indépendants (OP1, OP2).

Le service anonyme peut être un service réseau ou un service applicatif, pour lequel un utilisateur/client bénéficie d'un droit d'accès octroyé par un des opérateurs de la plateforme collaborative d'anonymisation. Dans un mode de réalisation, l'opérateur est le fournisseur de service internet (ISP) (« Internet Service Provider » en anglais) du client.

Le dispositif client pour accéder au service anonyme comprend au moins deux interfaces physiques (202-1, 202-2) connectées chacune à un opérateur réseau (104, 108), dont l'ISP du client.

Pour des raisons de simplicité de description et non de limitation de l'invention, bien que les exemples des figures 1 et 2 ne montrent qu'un nombre fini d'opérateurs (104, 108), l'homme du métier peut étendre les principes décrits à une pluralité d'opérateurs tout en apportant des modifications et/ou des variantes d'implémentation résultant de la généralisation. Ainsi le dispositif client peut avoir une seule ou plus que deux interfaces physiques pour établir une ou plus que deux connexions avec une pluralité d'opérateurs.

Dans un mode de réalisation de l'invention dite au niveau logique, c'est-à-dire quand la connexion à deux opérateurs de la plateforme est faite via une unique interface réseau physique, le service anonyme s'appuie alors sur un service d'anonymisation au niveau réseau qui présente les deux caractéristiques précédentes (connexion à deux opérateurs indépendants et droit d'accès accordé). Dans ce cas-là, le client peut se connecter de manière logique (et non physique) à deux opérateurs de la plateforme d'anonymisation.

Revenant à la figure 1, les opérateurs réseaux présentent chacun des points d'entrée PEi sur la plateforme 102. Chaque PEi est opéré par un des opérateurs de la plateforme collaborative d'anonymisation. Ainsi par exemple, le premier opérateur OP1 104, qui pour la suite de la description est désigné comme étant l'opérateur historique ou fournisseur d'accès internet ISP du client 202 (ou encore le fournisseur du service applicatif anonyme), gère des points d'entrée à la plateforme (106-1 à 106-i), et le second opérateur OP2 108 gère des points d'entrée à la plateforme (110-1 à 110-j).

La figure 2 illustre de plus une base de données ou registre de données 204 de clés publiques (Reg._clés_publiques) auquel le dispositif client accède lors de la mise en œuvre du procédé de connexion, et une base de données (AC) de clés privées 206 couplée aux opérateurs 104, 108 et utilisée comme base de données temporaire pendant le processus de connexion anonyme.

Chaque point d'entrée opérateur (PEi) à la plateforme collaborative d'anonymisation génère de manière aléatoire une clé publique (Cléi), pouvant ou non être mise à jour, et qui est stockée dans la base de données publique 204. La base contient ainsi un ensemble de couples « point d'entrée, clé publique » {(PEi; Cléi)}. Une telle base est accessible directement via le fournisseur d'accès à internet ou via la plateforme collaborative d'anonymisation pour le mode de réalisation de l'invention au niveau applicatif.

Dans un mode de réalisation où les clés sont mises à jour, des attributs additionnels bien connus de l'homme de l'art peuvent être ajoutés aux couples « point d'entrée, clé publique », comme par exemple une durée de vie (« Time-To-Live » en anglais (TTL)) indiquant le temps pendant lequel les clés sont conservées.

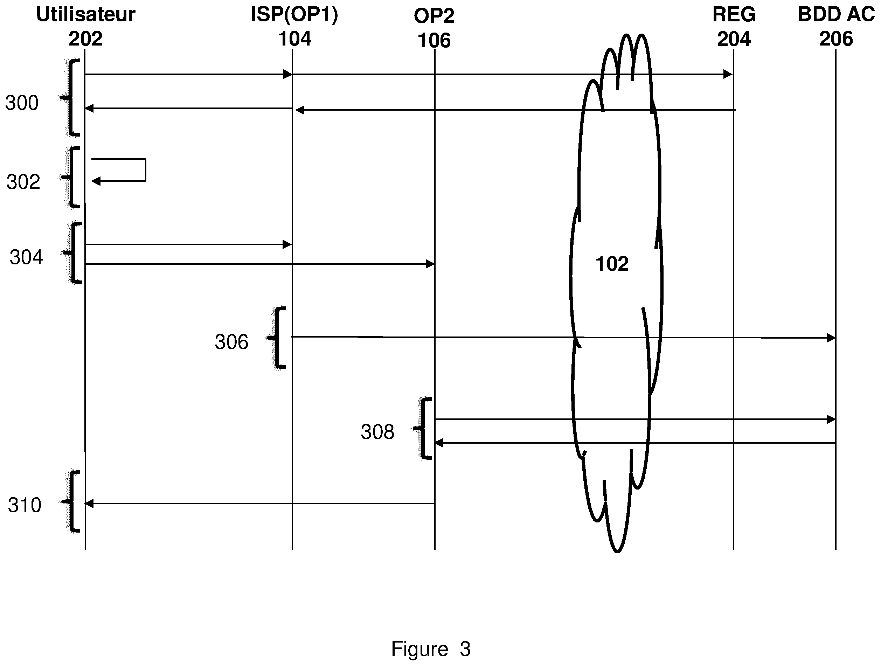

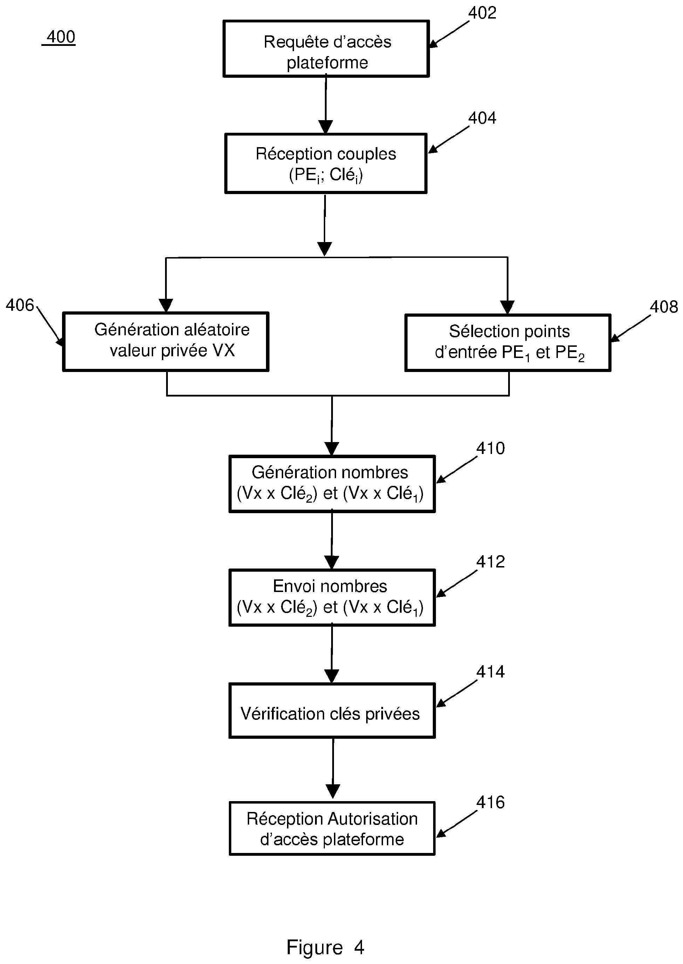

Les figures 3 et 4 décrivent une mise en œuvre du procédé de l'invention selon un mode de réalisation, où la figure 3 montre les flux existants entre les différentes entités de la figure 2 et où la figure 4 illustre les étapes de la méthode de l'invention impliquant deux opérateurs.

Il est à noter que les mêmes références sont reprises sur les différentes figures pour les éléments identiques.

Le principe général de connexion anonyme d'un client 202 à une plateforme collaborative d'anonymisation 102, consiste au niveau du client en ce qu'il :
- 300 : récupère l'ensemble des couples point d'entrée, clés publique {(PEi; Cléi)} contenus dans le registre public 204;
- 302 : génère de manière aléatoire une valeur aléatoire privée Vx ;
- 304 : envoie respectivement à chaque opérateur sélectionné ISP et OP2, via un de ses points d'entrée, un nombre dit « nombre privé utilisateur » (Vx x Clé2) et (Vx x Clé1), calculé à partir de la valeur aléatoire privée Vx et de la clé publique associée au point d'entrée de l'autre opérateur; et
- 310 : reçoit du second opérateur OP2 une autorisation d'accéder à la plateforme 102 (ou un rejet).

Par ailleurs, le procédé comprend des phases réalisées au niveau de chaque opérateur indépendant, et qui consistent en ce que :
- 306 : le premier opérateur (ISP) enregistre via la plateforme collaborative d'anonymisation, dans la base de données de clés privées 206, un nombre dit « nombre privé utilisateur-opérateur » ((Vx x Clé2) x Clé1), généré à partir du nombre privé utilisateur calculé pour cet opérateur et de la clé publique associée au point d'entrée de cet opérateur ; et
- 308 : le second opérateur OP2 vérifie via la plateforme collaborative d'anonymisation, si un « nombre privé utilisateur-opérateur » ((Vx x Clé1) x Clé2), généré à partir du nombre privé utilisateur calculé pour cet opérateur et de la clé publique associée au point d'entrée de cet opérateur, est stocké dans la base de données de clés privées 206, afin de renvoyer ou non une autorisation d'accès à l'utilisateur.

La figure 4 illustre les étapes du procédé 400 de connexion anonyme de l'invention. Le procédé débute quand un utilisateur/client qui dispose de droits d'accès à une plateforme collaborative d'anonymisation via son opérateur historique (en général l'ISP, son fournisseur d'accès à internet), souhaite accéder à un service opéré sur la plateforme collaborative d'anonymisation par un opérateur OP2 ou par un autre opérateur. L'utilisateur émet une requête d'accès 402 vers son opérateur. Le procédé permet ensuite que le client reçoive 404 une liste de couples {(PEi; Cléi)} où chaque couple contient un identifiant d'un point d'entrée vers la plateforme par un opérateur et une clé publique associée au point d'entrée.

Dans une étape suivante 406, le procédé permet de générer de manière aléatoire une valeur privée Vx, et permet à l'utilisateur de sélectionner 408 un premier point d'entrée PE1 opéré par son ISP, et un second point d'entrée PE2 opéré par le second opérateur. Dans un mode de réalisation alternatif, l'ordre des étapes 406 et 408 peut être inversé. La sélection du point d'entrée pour chaque opérateur peut être selon des variantes de réalisation, soit discrétionnaire, soit automatisé selon des critères prédéfinis.

Dans une étape suivante 410, le procédé permet de générer pour chaque point d'entrée sélectionné, un 'nombre privé utilisateur' définissant une clé privée. Chaque nombre privé utilisateur est généré à partir de la valeur aléatoire privée Vx et de la clé publique associée à l'autre point d'entrée sélectionné pour l'autre opérateur. Ainsi, pour le premier point d'entrée PE1 de l'opérateur historique, un premier nombre privé utilisateur (Vx x Clé2) est généré définissant une clé privée utilisateur côté premier opérateur, et pour le second point d'entrée PE2 du second opérateur, un second nombre privé utilisateur (Vx x Clé1) est généré définissant une seconde clé privée utilisateur côté second opérateur.

Dans un mode de réalisation avantageux, l'opération de chiffrage désignée par "Fx" pour la génération des nombres privés utilisateurs, est une opération de chiffrage prédéfinie telle que son opération inverse (i.e. retrouver 'a' et 'b' à partir de 'a Fx b') est extrêmement difficile à obtenir. Cette opération doit également être à la fois associative et commutative.

Dans un mode de réalisation préférentielle, l'opération "Fx" est une fonction connue d'élévation à une puissance modulaire.

Dans une variante de réalisation, l'opération 'Fx' appliquée est connue par l'homme du métier selon l'anglicisme « accumulators », et peut être basée sur les « Merkle trees », et les « non-Merkle accumulators » qui peuvent par exemple être de type « RSA accumulators » ou « Elliptic Curve accumulators ».

Un exemple d'opération 'Fx' basée sur les « accumultairs » est décrite dans l'article de J. Benaloh and M. de Mare, « One-way accumulators: A decentralized alternative to digital signatures », Advances in Cryptology-Eurocrypt'93, LNCS, vol. 765, Springer-Verlag, 1993, pp. 274-285.).

Dans une étape suivante 412, le procédé permet de communiquer à chaque opérateur (l'ISP et le second opérateur) le nombre privé utilisateur lui correspondant. Ainsi dans l'exemple illustré, le procédé permet d'envoyer au premier opérateur 104, le nombre privé utilisateur (Vx x Clé2) généré à partir de la clé publique Clé2 associée à l'autre point d'entrée sélectionné pour l'autre opérateur, et d'envoyer au second opérateur 106, le nombre privé utilisateur (Vx x Clé1) généré à partir de la clé publique Clé1 associée au point d'entrée sélectionné pour l'opérateur ISP.

L'étape suivante 414 consiste sur la plateforme collaborative d'anonymisation, en la vérification et validation des clés privées. Particulièrement, le procédé permet que le premier opérateur ISP ajoute 306 dans la base de données privée (AC), accessible uniquement au travers de la plateforme collaborative d'anonymisation, un nombre 'privé utilisateur-opérateur' ((Vx x Clé2) x Clé1) définissant une clé privée utilisateur-premier opérateur, et généré par l'opération de chiffrage Fx à partir du nombre privé utilisateur reçu de l'utilisateur - (Vx x Clé2) - et de la clé - (Clé1) - associée au point d'entrée choisi pour le premier opérateur.

Dans une variante de réalisation, l'enregistrement du nombre 'privé utilisateur-opérateur' dans la base de données privée (AC) est associé à l'enregistrement d'un paramètre de durée de vie prédéfini. Ceci permet avantageusement un nettoyage automatique de la base de données privée (AC) suite par exemple à des tentatives de connexion infructueuses, ce qui permet d'éviter une croissance continue et inutile du contenu de la base.

L'étape 414 consiste de plus en ce que le second opérateur OP2 interroge 308, via la plateforme collaborative d'anonymisation, la base de données privée (AC) pour vérifier s'il y est enregistré un nombre privé utilisateur-opérateur - ((Vx x Clé1) x Clé2) - définissant une clé privée utilisateur-second opérateur, et généré par l'opération de chiffrage Fx à partir du nombre privé utilisateur reçu de l'utilisateur - (Vx x Clé1) - et de la clé (Clé2) associée au point d'entrée choisi pour le second opérateur.

Si le résultat de la vérification est positif, le procédé permet dans une étape suivante 416, d'envoyer à l'utilisateur une autorisation d'accès à la plateforme collaborative d'anonymisation. En effet, si à l'étape de vérification, le second opérateur reçoit une confirmation de l'existence de la clé privée dans la base de données privée (AC), cette information indique qu'une transaction passée a déjà eu lieu entre ce même utilisateur et un opérateur (i.e. l'opérateur historique), et le second opérateur peut donc autoriser l'utilisateur à accéder à la plateforme collaborative d'anonymisation via son réseau.

Ainsi avantageusement, le procédé de l'invention permet de garantir que :
- ni l'opérateur initial ayant octroyé les droits d'accès à la plateforme au client/utilisateur, ni le service d'anonymisation, ni le second opérateur (ou plus généralement ni les autres opérateurs) que le client utilise pour accéder à la plateforme d'anonymisation, ne sont en mesure de « casser » l'anonymisation, c'est-à-dire qu'aucun n'est en mesure par une analyse réseau des requêtes de connexion au service, d'associer à l'utilisateur du service, des données permettant son identification ;
- l'opérateur ayant octroyé les droits d'accès au client/utilisateur ne sera pas en mesure de connaître le ou les autres opérateurs utilisés par le client pour accéder à la plateforme d'anonymisation ;
- le second ou tous les autres opérateurs ne seront pas en mesure de connaître l'opérateur initial ayant octroyé les droits d'accès au client/utilisateur, ce qui est une différence majeure avec les mécanismes de « roaming » utilisés par exemple en téléphonie mobile ;
- la plateforme réseau ou la logique d'anonymisation ne sera pas en mesure de savoir quels opérateurs sont utilisés par le client : rien d'autre ne peut être déduit que l'information qu'une nouvelle connexion légitime à la plateforme a eu lieu.

L'exemple a été décrit sur la base de deux opérateurs, mais le procédé est applicable et généralisable pour une pluralité d'opérateurs, permettant en fonction des propriétés de la plateforme collaborative d'anonymisation de renforcer le degré d'anonymat de l'utilisateur.

Ainsi, l'homme du métier peut dériver la généralisation selon le scénario suivant, similaire à celui décrit pour deux opérateurs :
- après avoir sélectionné 'n' couples (Point d'entrée (PEn) ; Clé (Clén)) d'opérateurs différents, parmi un ensemble de couples existant dans une base de donnée publique, les points d'entrée offrant un accès à une plateforme collaborative d'anonymisation par une pluralité d'opérateurs, et où chaque opérateur peut avoir un nombre identique ou différent de points d'entrée, un utilisateur envoie (i.e. le procédé permet d'envoyer depuis le dispositif client) à un premier point d'entrée PE1 sélectionné pour un premier opérateur (i.e. généralement l'opérateur historique du client ISP), un premier nombre privé utilisateur - ((Vx x Clé2 x ...x Clén) - construit à partir d'une valeur aléatoire Vx et des clés associées aux 'n-1' points d'entrée sélectionnés pour les autres opérateurs ;
- le premier opérateur inscrit dans la base de données privée du dispositif de l'invention couplée à la plateforme, un enregistrement d'un nombre privé utilisateur-opérateur - ((Vx x Clé2 x...x Clén ) x Clé1) - construit à partir du premier nombre privé utilisateur - ((Vx x Clé2 x ...x Clén) - et de la clé - Clé1 - associée au premier point d'entrée PE1 ;
- l'utilisateur envoie à un point d'entrée PE2 d'un second opérateur, un second nombre privé utilisateur - (Vx x Clé1 x Clé3 x ... x Clén) - construit à partir de la valeur aléatoire Vx et des clés associées aux 'n-1' points d'entrée sélectionnés pour les autres opérateurs ;
- le second opérateur OP2 interroge la base de données privée pour savoir si un enregistrement existe pour un nombre privé utilisateur-opérateur - ((Vx x Clé1 x Clé3 x ... x Clén) x Clé2) - construit à partir du second nombre privé utilisateur - (Vx x Clé1 x Clé3 x ... x Clén) - et de la clé - Clé2 - associée au point d'entrée PE2 du second opérateur ;
- l'utilisateur obtient une validation d'accès ou un refus d'accès à la plateforme collaborative d'anonymisation via le second opérateur.
- puis itérativement : l'utilisateur envoie pour chaque autre point d'entrée sélectionné jusqu'au nième - PEn - un nombre privé utilisateur correspondant - (Vx x Clé1 x ... x Clén-1) - et chaque opérateur respectif interroge la base de données privées pour vérifier l'existence d'un nombre privé utilisateur-opérateur correspondant - ((Vx x Clé1 x ... x Clén-1) x Clén) - et accorder ou refuser l'accès à la plateforme via l'opérateur correspondant.

Dans un autre mode de réalisation de l'invention, le premier opérateur peut inscrire dans la base de données privée l'enregistrement du nombre privé utilisateur-opérateur avec un paramètre de durée de vie (TTL) pour le nombre 'n'. Un compteur permet de décompter le paramètre TTL à chaque interrogation positive de la base de données par un autre opérateur, afin que lorsque l'ensemble des 'n' points d'entrée a été vérifié le TTL est à zéro. La base de données privée d'accès peut effacer l'enregistrement.

L'invention décrite peut s'implémenter à partir d'éléments matériel et/ou logiciel. Elle peut être disponible en tant que produit programme d'ordinateur exécuté par un processeur qui comprend des instructions de code pour exécuter les étapes du procédé dans les différents modes de réalisation.

## Revendications

1. Un procédé permettant un accès anonyme à une plateforme collaborative d'anonymisation opérée par une pluralité d'opérateurs, chaque opérateur ayant un nombre identique ou différent de points d'entrée PEi vers ladite plateforme, le procédé étant mis en œuvre par ordinateur et comprenant les étapes suivantes :
- émettre (402) une requête d'accès à un service de la plateforme collaborative d'anonymisation, pour un utilisateur (202) ayant des droits d'accès à ladite plateforme octroyés par un premier opérateur OP1;
- recevoir (404) une liste de couples (PEi; Cléi) où chaque couple contient un identifiant d'un point d'entrée PEi vers ladite plateforme par un opérateur parmi la pluralité d'opérateurs, et contient une clé publique Cléi aléatoire générée pour ce point d'entrée ;
- générer (406) de manière aléatoire, une valeur aléatoire privée Vx ;
- sélectionner (408) n couples (PEn, Clén) de la liste de couples (PEi; Cléi) où un premier couple (PE1, Clé1) a
un identifiant de point d'entrée PE1 vers ladite plateforme par le premier opérateur OP1, et où chaque autre couple ((PE2, Clé2), ..., (PEi, Cléi), ..., (PEn, Clén)) a un identifiant de point d'entrée vers ladite plateforme par un autre opérateur ;
- communiquer (412) :
- au premier opérateur via le point d'entrée PE1 sélectionné, une première clé privée Fx(Vx, Clé2, ... , Clén), construite, selon une opération de chiffrage 'Fx' prédéfinie associative et commutative, à partir de la valeur aléatoire privée Vx et de toutes les clés publiques associées aux 'n-1' autres points d'entrée sélectionnés sauf la clé publique Clé1 du point d'entrée PE1 du premier couple (PE1, Clé1) ; et
- à chaque opérateur de chaque autre couple sélectionné, une clé privée Fx(Vx, Clé1, ... , Cléi, ..., Clén) construite, selon l'opération de chiffrage 'Fx', à partir de la valeur aléatoire privée Vx et de toutes les clés publiques associées aux 'n-1' autres points d'entrée sauf la clé publique dudit point d'entrée de chaque autre couple ;
- enregistrer via la plateforme collaborative d'anonymisation dans une base de données de clés privées (206), une clé privée utilisateur construite à partir de la première clé privée Fx(Vx, Clé2, ... , Clén) et de la clé publique Clé1 associée au premier point d'entrée ;
- mettre en œuvre (414) sur la plateforme collaborative d'anonymisation, un algorithme de vérification de clés privées, l'algorithme opérant de manière itérative entre le premier opérateur et chacun des autres opérateurs sélectionnés pour vérifier dans la base de données de clés privées, la validité de la clé privée utilisateur; et
- valider (416) ou refuser à l'utilisateur un accès à la plateforme collaborative d'anonymisation via le point d'entrée de chaque opérateur, selon le résultat de la vérification.

2. Le procédé selon la revendication 1 dans lequel l'étape de communication des clés privées comprend les étapes (410) de :
- calculer un premier nombre dit « premier nombre privé utilisateur » (Vx x Clé2 x ... x Clén) à partir de la valeur aléatoire privée Vx et des clés publiques associées aux 'n-1' points d'entrée sélectionnés pour les autres opérateurs où la première clé privée est basée sur le premier nombre privé utilisateur ; et
- calculer pour chaque autre opérateur un second nombre dit « second nombre privé utilisateur » (Vx x Clé1 x ... x Cléi x ... x Clén) à partir de la valeur aléatoire privée Vx et de toutes les clés publiques associées aux 'n-1' autres points d'entrée sauf la clé publique dudit point d'entrée, où la clé privée est basée sur le second nombre privé utilisateur.

3. Le procédé selon la revendication 1 ou 2 dans lequel l'étape de mise en œuvre (414) sur la plateforme collaborative d'anonymisation, d'un algorithme de vérification et de validation de clés privées entre le premier opérateur et chacun des autres opérateurs, comprend des étapes de :
- (306) pour le premier opérateur :
- générer à partir du premier nombre privé utilisateur reçu et de la clé publique associée au point d'entrée du premier opérateur, un nombre dit « premier nombre privé utilisateur-opérateur » ((Vx x Clé2 x ... x Cléi x ... x Clén) x Clé1) ; et
- enregistrer via la plateforme collaborative d'anonymisation, la clé privée utilisateur où la clé privée utilisateur est basée sur le premier nombre privé utilisateur-opérateur ((Vx x Clé2 x... x Cléi x ... x Clén) x Clé1) dans une base de données de clés privées (206) ;
- (308) pour chacun des autres opérateurs, l'algorithme de vérification de clés privées consistant à :
- générer à partir du second nombre privé utilisateur reçu et de la clé publique associée au point d'entrée dudit autre opérateur, un nombre dit « second nombre privé utilisateur-opérateur » ((Vx x Clé1 x ... x Clén) x Cléi) ; et
- vérifier via la plateforme collaborative d'anonymisation, si le second nombre privé utilisateur-opérateur » ((Vx x Clé1 x ... x Clén) x Cléi) est enregistré dans ladite base de données de clés privées (206).

4. Le procédé selon la revendication 3 dans lequel l'étape d'enregistrement dans la base de données de clés privées, de la clé privée utilisateur, comprend de plus l'enregistrement d'un paramètre de durée de vie de ladite clé privée.

5. Le procédé selon la revendication 4 comprenant de plus après l'étape d'enregistrement une étape de décomptage du paramètre de durée de vie.

6. Le procédé selon l'une quelconque des revendications 1 à 5 dans lequel l'étape de sélection des 'n' couples (PEn, Clén) est faite de manière automatique selon des critères de sélection prédéfinis.

7. Le procédé selon l'une quelconque des revendications 1 à 6 dans lequel l'opération de chiffrage Fx est une opération de type élévation à une puissance modulaire.

8. Le procédé selon l'une quelconque des revendications 1 à 6 dans lequel l'opération de chiffrage Fx est une opération dite « one-way accumulators ».

9. Un produit programme d'ordinateur, ledit programme d'ordinateur comprenant des instructions de code non transitoire permettant d'effectuer les étapes du procédé selon l'une quelconque des revendications 1 à 8, lorsque ledit programme est exécuté sur un ordinateur.

10. Un dispositif de contrôle d'accès anonyme à une plateforme collaborative d'anonymisation opérée par différents opérateurs (104, 108), pour un utilisateur (202) ayant des droits d'accès à la plateforme collaborative d'anonymisation par un premier opérateur ou fournisseur d'accès, le dispositif comprenant des moyens pour mettre en œuvre les étapes du procédé selon l'une quelconque des revendications 1 à 8.

## Patentansprüche

1. Verfahren, das einen anonymen Zugang zu einer kollaborativen Anonymisierungsplattform ermöglicht, die von einer Vielzahl von Betreibern betrieben wird, wobei jeder Betreiber eine identische oder unterschiedliche Anzahl an Eingangspunkten PEi zur Plattform aufweist, wobei das Verfahren durch einen Computer umgesetzt wird, und die folgenden Schritte umfasst:
- Ausgeben (402) einer Zugangsanfrage zu einem Dienst der kollaborativen Anonymisierungsplattform, für einen Benutzer (202), der Zugangsrechte zur Plattform aufweist, die von einem ersten Betreiber OP1 gewährt werden;
- Empfangen (404) einer Paarliste (PEi; Cléi), wobei jedes Paar eine Kennung eines Eingangspunkts PEi zur Plattform durch einen Betreiber aus der Vielzahl von Betreibern enthält, und einen zufälligen öffentlichen Schlüssel Cléi enthält, der von diesem Eingangspunkt generiert wird;
- Generieren (406) auf zufällige Weise, eines zufälligen privaten Werts Vx;
- Auswählen (408) von n Paaren (PEn, Clén) aus der Paarliste (PEi; Cléi), wobei ein erstes Paar (PE1, Clé1) eine Kennung eines Eingangspunkts PE1 zur Plattform durch den ersten Betreiber OP1 aufweist, und wobei jedes andere Paar ((PE2, Clé2), ..., (PEi, Cléi), ..., (PEn, Clén)) eine Kennung eines Eingangspunkts zur Plattform durch einen anderen Betreiber aufweist;
- Kommunizieren (412):
- an den ersten Betreiber über den ausgewählten Eingangspunkt PE1, eines ersten privaten Schlüssels Fx(Vx, Clé2, ... , Clén), der gemäß einer vordefinierten assoziativen und kommutativen Chiffrieroperation 'Fx' aus dem zufälligen privaten Wert Vx und allen anderen 'n-1 'ausgewählten Eingangspunkten zugeordneten öffentlichen Schlüsseln, mit Ausnahme des öffentlichen Schlüssels Clé1 des Eingangspunkts PE1 des ersten Paares (PE1, Clé1) erstellt wird; und
- an jeden Betreiber jedes anderen ausgewählten Paares, eines privaten Schlüssels Fx(Vx, Clé1, ... , Cléi, ..., Clén), der gemäß der Chiffrieroperation 'Fx' aus dem zufälligen privaten Wert Vx und allen anderen 'n-1 'Eingangspunkten zugeordneten öffentlichen Schlüsseln, mit Ausnahme des öffentlichen Schlüssels des Eingangspunkts eines jeden anderen Paares erstellt wird;
- Speichern über die kollaborative Anonymisierungsplattform in einer Datenbank privater Schlüssel (206), eines privaten Benutzerschlüssels, der aus dem ersten privaten Schlüssel Fx(Vx, Clé2, ... , Clén) und dem dem ersten Eingangspunkt zugeordneten öffentlichen Schlüssel Clé1 erstellt wird;
- Umsetzen (414) auf der kollaborativen Anonymisierungsplattform eines Verifizierungsalgorithmus privater Schlüssel, wobei der Algorithmus iterativ zwischen dem ersten Betreiber und jedem der anderen ausgewählten Betreiber arbeitet, um in der Datenbank privater Schlüssel die Gültigkeit des privaten Benutzerschlüssels zu verifizieren; und
- Validieren (416) oder Ablehnen für den Benutzer eines Zugangs zur kollaborativen Anonymisierungsplattform über den Eingangspunkt eines jeden Betreibers, je nach Verifizierungsergebnis.

2. Verfahren nach Anspruch 1, wobei der Kommunikationsschritt der privaten Schlüssel die Schritte (410) umfasst zum:
- Berechnen einer ersten "erste private Benutzeranzahl" genannten Anzahl (Vx x Clé2 x ... x Clén) aus dem zufälligen privaten Wert Vx und den den 'n-1 ' ausgewählten Eingangspunkten zugeordneten öffentlichen Schlüsseln für die anderen Betreiber, wobei der erste private Schlüssel auf der ersten privaten Benutzeranzahl basiert; und
- Berechnen für jeden anderen Betreiber einer zweiten "zweite private Benutzeranzahl" genannten Anzahl (Vx x Clé1 x ... x Cléi x ... x Clén) aus dem zufälligen privaten Wert Vx und allen anderen den anderen 'n-1' Eingangspunkten zugeordneten öffentlichen Schlüsseln mit Ausnahme des öffentlichen Schlüssels des Eingangspunkts, wobei der private Schlüssel auf der zweiten privaten Benutzeranzahl basiert.

3. Verfahren nach Anspruch 1 oder 2 wobei der Umsetzungsschritt (414) auf der kollaborativen Anonymisierungsplattform, eines Verifizierungs- und Validierungsalgorithmus privater Schlüssel zwischen dem ersten Bediener und jedem der anderen Bediener Schritte umfasst zum:
- (306) für den ersten Betreiber:
- Generieren aus der ersten empfangenen privaten Benutzeranzahl und dem dem Eingangspunkt des ersten Betreibers zugeordneten öffentlichen Schlüssel, einer "erste private Benutzer-Betreiberanzahl" ((Vx x Clé2 x ... x Cléi x ... x Clén) x Clé1) genannten Anzahl; und
- Speichern über die kollaborative Anonymisierungsplattform des privaten Benutzerschlüssels, wobei der private Benutzerschlüssel auf der ersten privaten Benutzer-Betreiberanzahl" ((Vx x Clé2 x... x Cléi x ... x Clén) x Clé1 ) in einer Datenbank privater Schlüssel (206) basiert;
- (308) für jeden der anderen Betreiber der Verifizierungsalgorithmus privater Schlüssel besteht aus:
- Generieren aus der zweiten empfangenen privaten Benutzeranzahl und dem dem Eingangspunkt des anderen Betreibers zugeordneten öffentlichen Schlüssel, einer "zweite private Benutzer-Betreiberanzahl" ((Vx x Clé1 x ... x Clén) x Cléi) genannten Anzahl; und
- Verifizieren über die kollaborative Anonymisierungsplattform, ob die zweite private Benutzer-Betreiberanzahl ((Vx x Clé1 x ... x Clén) x Cléi) in der Datenbank privater Schlüssel (206) gespeichert ist.

4. Verfahren nach Anspruch 3 wobei der Speicherschritt in der Datenbank privater Schlüssel des privaten Benutzerschlüssels weiter das Speichern eines Lebensdauerparameters des privaten Schlüssels umfasst.

5. Verfahren nach Anspruch 4, das weiter nach dem Speicherschritt einen Rückzählschritt des Lebensdauerparameters umfasst.

6. Verfahren nach einem der Ansprüche 1 bis 5, wobei der Auswahlschritt der 'n' Paare (PEn, Clén) automatisch gemäß vordefinierten Auswahlkriterien erfolgt.

7. Verfahren nach einem der Ansprüche 1 bis 6, wobei die Chiffrieroperation Fx eine Operation vom Typ Erhöhen auf eine modulare Leistung ist.

8. Verfahren nach einem der Ansprüche 1 bis 6, wobei die Chiffrieroperation Fx eine "Einweg-Akkumulatoren" genannte Operation ist.

9. Computerprogrammprodukt, wobei das Computerprogramm Codeanweisungen umfasst, die es ermöglichen, die Schritte des Verfahrens nach einem der Ansprüche 1 bis 8 auszuführen, wenn das Programm auf einem Computer ausgeführt wird.

10. Vorrichtung zur Kontrolle eines anonymen Zugangs zu einer kollaborativen Anonymisierungsplattform, die von verschiedenen Betreibern (104, 108) betrieben wird, für einen Benutzer (202), der Zugangsrechte zur kollaborativen Anonymisierungsplattform durch einen ersten Betreiber oder Zugangsanbieter aufweist, wobei die Vorrichtung Mittel zum Umsetzen der Schritte des Verfahrens nach einem der Ansprüche 1 bis 8 umfasst.

## Claims

1. Method allowing an anonymous access to a collaborative anonymization platform operated by a plurality of operators, each operator having an identical or different number of points of entry PEi to said platform, the method being implemented by computer and comprising the steps of:
- sending out (402) a request for access to a service of the collaborative anonymization platform, for a user (202) having access rights to said platform granted by a first operator OP1;
- receiving (404) a list of data pairs (PEi; Keyi) where each data pair contains an identifier of a point of entry PEi to said platform by an operator from amongst the plurality of operators, and contains a random public key Keyi generated for this point of entry;
- generating (406), in a random manner, a private random value Vx;
- selecting (408) 'n' data pairs (PEn, Keyn), from the list of data pairs (PEi; Keyi) where a first data pair (PE1, Key1) has an identifier of point of entry PE1 to said platform by the first operator OP1, and where each other data pair ((PE2, Key2), ..., (PEi, Keyi), ..., (PEn, Keyn)) has an identifier of point of entry to said platform by another operator;
- communicating (412):
- to the first operator via the selected point of entry PE1, a first private key Fx(Vx, Key2, ..., Keyn), constructed, according to a predefined associative and commutative encryption operation 'Fx', from the private random value Vx and from all the public keys associated with the 'n-1' other selected points of entry except for the public key Key1 of the point of entry PE1 of the first data pair (PE1, Key1); and
- to each operator of each other selected data pair, a private key Fx(Vx, Key1, ..., Keyi, ..., Keyn) constructed, according to the encryption operation 'Fx', from the private random value Vx and from all the public keys associated with the 'n-1' other points of entry except for the public key of said point of entry of each other data pair;
- recording, via the collaborative anonymization platform in a database of private keys (206), a user private key constructed from the first private key Fx(Vx, Key2, ..., Keyn) and from the public key Key1 associated with the first point of entry;
- implementing (414), on the collaborative anonymization platform, an algorithm for verifying private keys, the algorithm operating in an iterative manner between the first operator and each of the other selected operators in order to verify, in the database of private keys, the validity of the user private key; and
- validating (416) or refusing access for the user to the collaborative anonymization platform via the point of entry of each operator, depending on the result of the verification.

2. Method according to claim 1, wherein the step of communicating the private keys comprises the steps (410) of:
- calculating a first number called "first private user number" (Vx x Key2 x ... x Keyn) from the private random value Vx and from the public keys associated with the 'n-1' points of entry selected for the other operators, where the first private key is based on the first private user number; and
- calculating, for each other operator, a second number called "second private user number" (Vx x Key1 x ... x Keyi x ... x Keyn) from the private random value Vx and from all the public keys associated with the 'n-1' other points of entry except for the public key of said point of entry, where the private key is based on the second private user number.

3. Method according to claim 1 or 2, wherein the step of implementing (414), on the collaborative anonymization platform, an algorithm for verifying and for validating private keys between the first operator and each of the other operators, comprises the steps of:
- (306) for the first operator:
- generating, from the first private user number received and from the public key associated with the point of entry of the first operator, a number called "first private user-operator number" ((Vx x Key2 x ... x Keyi x ... x Keyn) x Key1); and
- recording, via the collaborative anonymization platform, the private user key where the private user key is based on the first private user-operator number ((Vx x Key2 x... x Keyi x ... x Keyn) x Key1) in a database of private keys (206);
- (308) for each of the other operators, the algorithm for verifying private keys consisting of:
- generating, from the second private user number received and from the public key associated with the point of entry of said other operator, a number called "second private user-operator number" ((Vx x Key1 x ... x Keyn) x Keyi); and
- verifying, via the collaborative anonymization platform, whether the "second private user-operator number" ((Vx x Key1 x ... x Keyn) x Keyi) is recorded in said database of private keys (206).

4. Method according to claim 3, wherein the step of recording the private user key in the database of private keys, further comprises the recording of a lifetime parameter for said private key.

5. Method according to claim 4 further comprising, after the recording step, a step of counting down the lifetime parameter.

6. Method according to any one of claims 1 to 5, wherein the step of selection of the 'n' data pairs (PEn, Keyn) is carried out automatically according to predefined selection criteria.

7. Method according to any one of claims 1 to 6, wherein the encryption operation Fx is an operation of the modular exponentiation type.

8. Method according to any one of claims 1 to 6, wherein the encryption operation Fx is an operation referred to as "one-way accumulators".

9. Computer program product, said computer program comprising non-transitory code instructions allowing the steps of the method according to any one of claims 1 to 8 to be carried out, when said program is executed on a computer.

10. Device for anonymous access control to a collaborative anonymization platform operated by various operators (104, 108), for a user (202) having access rights to the collaborative anonymization platform by a first operator or access provider, the device comprising means of implementing the steps of the method according to any one of claims 1 to 8.
